(19) **Europäisches Patentamt / European Patent Office / Office européen des brevets**

(11) **EP 3 629 628 B1**

(12) **FASCICULE DE BREVET EUROPEEN**

(45) Date de publication et mention de la délivrance du brevet:
**23.08.2023 Bulletin 2023/34**

(51) Classification Internationale des Brevets (IPC):
**H04W 40/12** *(2009.01)*   **H04W 40/02** *(2009.01)*
**H04W 28/02** *(2009.01)*

(21) Numéro de dépôt: **19199839.2**

(22) Date de dépôt: **26.09.2019**

(52) Classification Coopérative des Brevets (CPC):
**H04W 40/02; H04W 28/0231; H04W 28/0247; H04W 28/0268; H04W 40/12**

(54) **PROCÉDÉ DE DÉTERMINATION D'UNE ÉLIGIBILITÉ À UN TRANSFERT DE CONNEXION POUR UN NOEUD D'UN RÉSEAU DISTRIBUÉ**

BESTIMMUNGSVERFAHREN EINER BERECHTIGUNG FÜR DIE VERBINDUNGSÜBERTRAGUNG EINES KNOTENS IN EINEM VERTEILTEN NETZ

METHOD FOR DETERMINING ELIGIBILITY FOR A CONNECTION TRANSFER FOR A NODE OF A DISTRIBUTED NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2018 FR 1859006**

(43) Date de publication de la demande:
**01.04.2020 Bulletin 2020/14**

(73) Titulaire: **SAGEMCOM BROADBAND SAS**
**92500 Rueil-Malmaison (FR)**

(72) Inventeur: **LE ROUX, Sylvain**
**92500 Rueil Malmaison (FR)**

(74) Mandataire: **Cabinet Le Guen Maillet**
**3, impasse de la Vigie**
**CS 71840**
**35418 Saint-Malo Cedex (FR)**

(56) Documents cités:
WO-A1-2018/006250    US-A1- 2010 056 157
US-A1- 2016 066 301    US-A1- 2018 084 471
US-B1- 8 089 939    US-B1- 9 538 446

**Description**

La présente invention concerne le domaine des réseaux de communications sans fil conformes à l'une des normes IEEE 802.11 *(« Instituée ofElectrical and Electronics Engineers »* en anglais), c'est-à-dire celui des réseaux de communication sans fil communément appelés réseaux *« Wi-Fi »*. La présente invention concerne plus particulièrement un procédé de détermination d'une éligibilité à un transfert de connexion d'un noeud client d'un réseau de communication distribué.

Un réseau de communication sans fil (ci-après « réseau ») conforme à l'une des normes IEEE 802.11 comprend typiquement une pluralité de noeuds. Chaque noeud est un dispositif électronique comprenant *a minima* un module radiofréquence permettant l'établissement de communications conformément à l'une des normes IEEE 802.11, ou dit autrement, conformément à l'une des normes Wi-Fi. Un tel réseau comprend typiquement un noeud ou dispositif électronique dit maître, communément appelé point d'accès (*« Access Point »* en anglais, ou « AP ») et une pluralité de noeuds ou dispositifs électroniques dits utilisateurs (ou clients) pouvant établir des connexions sans fil avec le point d'accès et/ou entre elles. Dans un environnement résidentiel, le dispositif électronique maître, ou point d'accès, est typiquement une *« box »* fournie par un opérateur Internet, c'est-à-dire une passerelle domestique (*« home gateway »*, ou *« residential gateway »*, en anglais). Les dispositifs électroniques utilisateurs sont typiquement des ordinateurs, télévisions, tablettes ou téléphones dits *« intelligents »* (*« smartphone »* en anglais). On dit ainsi communément que les dispositifs électroniques utilisateurs sont associés ou connectés *« en Wi-Fi »* avec le point d'accès.

L'architecture d'un réseau Wi-Fi peut aussi être une architecture dite distribuée, afin par exemple d'étendre la portée du réseau sans fil ou d'augmenter ses performances, par l'utilisation d'une pluralité de points d'accès. L'architecture d'un réseau Wi-Fi distribuée comprend typiquement deux réseaux :

- un premier réseau dit de collecte ou d'infrastructure (*« backhaul »* en anglais), permettant de relier les points d'accès entre eux et de constituer une infrastructure réseau suivant une architecture réseau de type mixte étoile et/ou chaîne, ce réseau de collecte pouvant être un réseau sans-fil (par exemple Wi-Fi), un réseau filaire (par exemple Ethernet) ou un mélange des deux,
- un deuxième réseau dit utilisateur (ou client) (*« fronthaul »* en anglais), permettant une connexion sans fil de noeuds (ou dispositifs électroniques) dits utilisateurs (ou clients, ou encore stations) au réseau Wi-Fi distribué.

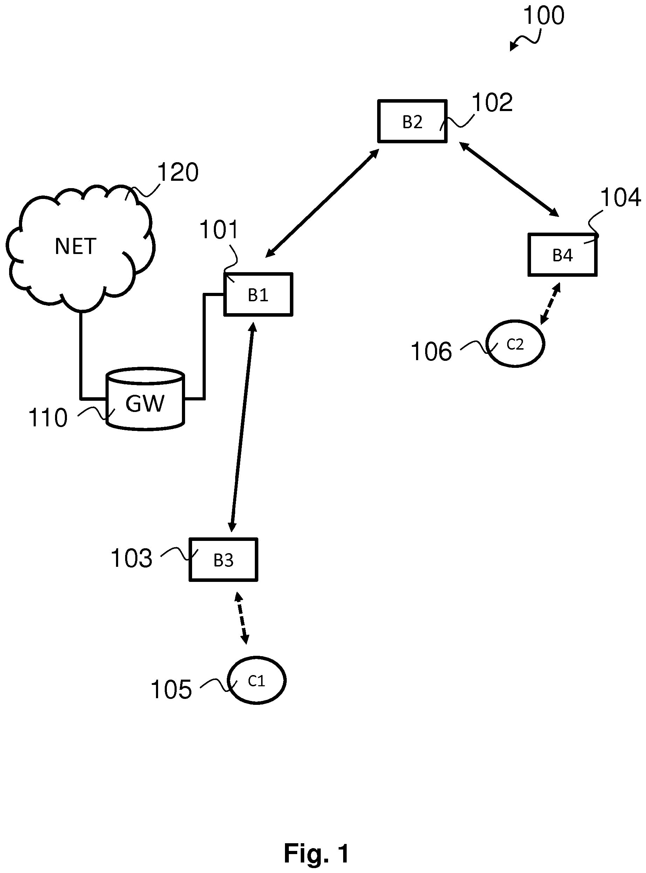

La Fig. 1 illustre de façon très schématique un tel réseau Wi-Fi distribué 100. Le réseau de communication sans fil distribué 100 (ci-après « réseau 100 ») comprend une passerelle 110 (ou *« gateway »* en anglais) et une pluralité de noeuds ou dispositifs électroniques B1 101, B2 102, B3 103, B4 104, C1 105 et C2 106. La passerelle 110 permet une interconnexion du réseau 100 avec un réseau 120, par exemple le réseau Internet. Dans cet exemple, les noeuds B1, B2, B3 et B4 sont des noeuds dits de collecte. Ces noeuds B1, B2, B3 et B4 constituent l'infrastructure de collecte (*« backhaul »*) du réseau 100. Les noeuds C1 et C2 sont deux noeuds clients connectés à des noeuds de collecte (respectivement les noeuds B3 et B4). Les noeuds de collecte B1, B2, B3 et B4 gèrent typiquement deux réseaux Wi-Fi :

- un premier réseau Wi-Fi, dédié à la collecte, permet une connexion de chaque noeud de collecte au réseau distribué 100, possiblement de façon chainée,
- un deuxième réseau Wi-Fi est dédié à la connexion des noeuds clients à l'un ou l'autre des noeuds de collecte, de façon similaire à un réseau Wi-Fi non distribué.

Dans l'exemple illustré dans la Fig. 1, le noeud B1 101 est connecté de façon filaire à la passerelle GW 110, par exemple via une connexion Ethernet. Selon un mode de réalisation, la connexion entre la passerelle GW 110 et le noeud B1 101 peut être réalisée par une connexion Wi-Fi. Selon un mode de réalisation, la passerelle GW 110 et le noeud B1 101 sont un seul et même dispositif électronique, ledit dispositif électronique comprenant les fonctionnalités de la passerelle GW 110 et du noeud B1 101.

Chaque noeud de collecte B1, B2, B3 ou B4 peut donc possiblement établir une connexion vers un autre noeud de collecte afin de constituer l'infrastructure de collecte du réseau distribué 100. Il est à noter que, selon un mode de réalisation, certains noeuds de collecte peuvent être connectés via une liaison filaire, par exemple de type Ethernet, au réseau d'infrastructure.

Un noeud utilisateur, telle noeud utilisateur C1 ou le noeud utilisateur C2, peut donc potentiellement établir une connexion sans fil avec l'un ou l'autre des noeuds de collecte B1, B2, B3 ou B4. Typiquement, un noeud client cherche à établir une connexion sans fil avec le noeud de collecte qui émet le signal radio le plus fort. Dit autrement, un noeud client cherche à établir une connexion sans fil avec un noeud de collecte parmi la pluralité de noeuds de collecte disponibles, le noeud de collecte choisi correspondant au noeud de collecte dont le signal radio est reçu avec la plus forte puissance par le noeud client.

Ce choix n'est pas toujours le choix optimal du point de vue du réseau de communication distribué. En effet, le noeud de collecte choisi par un noeud client pour se connecter peut certes être celui-ci offrant la meilleure qualité de réception du signal radio, mais ce noeud de collecte peut être par ailleurs surchargé en termes de nombre de noeuds clients déjà connectés ou de trafic de collecte transitant par ce noeud. Il pourrait être optimal dans ce cas que le noeud client se connecte à un autre noeud de collecte moins chargé même si ce dernier offre a priori une moins bonne qualité de signal radio.

Plus prosaïquement, le noeud client est seul décideur du noeud de collecte utilisé pour se connecter au réseau, il n'est pas possible d'établir pour un réseau de communication sans fil distribué de stratégie centralisée de connexion des noeuds clients aux différents noeuds de collecte.

La demande de brevet français n° 18/55829 déposée le 28 juin 2018 au nom de SAGEMCOM BROADBAND SAS divulgue une solution permettant de pallier ce manque de fonctionnalité de type « transfert de connexion » (ou « handover » en anglais) dans un réseau de communication de type Wi-Fi. La solution divulguée permet de déterminer s'il est pertinent de transférer une connexion d'un noeud client établie avec un premier noeud de collecte vers un autre noeud de collecte. Si c'est le cas, la solution divulgue un procédé permettant de sélectionner un autre noeud de collecte plus adapté à la connexion du noeud client, selon une variété de critères ne se limitant pas à la seule puissance d'un signal radio reçu. La solution divulguée permet finalement de réaliser le transfert de la connexion entre le noeud client et le premier noeud de collecte vers un deuxième noeud de collecte.

La solution divulguée dans la demande de brevet comprend une pluralité de modes de réalisation, les différents modes de réalisation étant adaptés aux fonctionnalités des noeuds clients. Ainsi, selon un mode de réalisation divulgué dans la demande de brevet citée, plus précisément dans la description de la Fig. 2, la solution décrit un procédé adapté en particulier à des noeuds clients non compatibles ou conformes avec les normes IEEE 802.11k et/ou IEEE 802.11v. Dans ce cas particulier, pour un noeud client connecté à un premier noeud de collecte, le procédé comprend les principales étapes de :

- calcul d'un indicateur de qualité, dit « ScoreStation », associé au noeud client,

- et, si cet indicateur de qualité est révélateur d'une mauvaise qualité de connexion avec le premier noeud de collecte (dépassement d'un seuil prédéterminé), alors la solution divulguée permet le blocage temporaire de la connexion entre le noeud client et le premier noeud de collecte (cf. description de l'étape 205 de la demande de brevet citée), ce qui force alors le noeud client à se connecter à un autre noeud de collecte (cf. description de l'étape 206 de la demande de brevet citée).

Cette solution permet d'introduire une notion de « transfert de connexion » (ou « handover » en anglais) dans un réseau de communication de type Wi-Fi, et ce même pour des noeuds clients non conformes aux normes IEEE 802.11k et/ou IEEE 802.11v.

Toutefois, si le noeud client est dans une situation où il ne peut se connecter qu'au premier noeud de collecte, ou bien si ce premier noeud de collecte est *in fine* le noeud de collecte permettant d'obtenir la meilleure qualité de connexion avec le noeud client, alors le procédé divulgué dans la demande de brevet cité entraîne une très grande instabilité de la connexion entre le noeud client et le premier noeud de collecte, cette connexion étant alors interrompue ou dégradée à chaque blocage de la connexion avec le premier noeud de collecte. Le blocage pouvant être déclenché à chaque itération du procédé de gestion de la connexion du noeud client si l'indicateur de qualité associé au noeud client reste indicateur d'une mauvaise qualité de connexion, telle que définie par un seuil prédéfini.

La demande de brevet US 2018/084471 décrit un procédé de gestion du basculement de la connexion d'un client d'un point d'accès vers un autre point d'accès.

La demande de brevet US 2010/056157 décrit un procédé de transfert de la connexion d'une station depuis un premier système ("serving system") vers un second système ("target system").

Il est donc nécessaire de proposer un procédé permettant de pallier ces inconvénients.

### Synthèse

L'invention concerne un procédé de détermination d'une éligibilité à un transfert de connexion d'un noeud client d'un réseau de communication distribué comprenant une pluralité de noeuds de collecte, le noeud client étant connecté à un premier noeud de collecte, le noeud client étant associé à un niveau parmi une pluralité de niveaux, le procédé étant exécuté par un noeud dit de gestion et comprenant les étapes itératives de :

- déterminer un indicateur de qualité de connexion associé au noeud client, l'indicateur de qualité de connexion étant représentatif d'une qualité de la connexion entre le premier noeud de collecte et le noeud client,
- déterminer, en fonction du niveau associé au noeud client, un seuil de qualité de connexion, ledit seuil étant d'autant plus indicateur d'une bonne qualité de connexion que le niveau associé au noeud client est bas,

si l'indicateur de qualité de connexion comparativement au seuil indique une mauvaise qualité relative de la connexion, alors :

- incrémenter le niveau associé au noeud client,
- exécuter des étapes d'un procédé de transfert de la connexion du noeud client, ou bien, si l'indicateur de qualité de connexion comparativement au seuil indique une bonne qualité relative de la connexion, alors :
- si, et tant que, l'indicateur de qualité de connexion comparativement à un seuil déterminé en fonction du niveau immédiatement inférieur au niveau associé au noeud client indique une meilleure qualité de connexion, alors : décrémenter le niveau associé au noeud client.

Si l'indicateur de qualité de connexion comparativement au seuil indique une bonne qualité relative de la connexion, alors l'indicateur de qualité de connexion est comparé à un seuil déterminé en fonction du niveau immédiatement inférieur au niveau associé au noeud client, seuil auquel est ajouté une marge prédéfinie.

Le niveau associé à un noeud client est un entier naturel strictement positif.

Selon un mode de réalisation complémentaire de l'invention, l'ensemble des seuils déterminés en fonction des niveaux associés à un noeud client constitue une suite arithmétique ou géométrique.

Selon un mode de réalisation complémentaire de l'invention, l'écart entre deux seuils consécutifs de qualité de connexion déterminés en fonction des niveaux d'un noeud client est supérieur à la variabilité de l'indicateur de qualité de connexion associé au noeud client dans une position statique.

Selon un mode de réalisation complémentaire de l'invention, l'écart entre deux seuils consécutifs de qualité de connexion déterminés en fonction des niveaux d'un noeud client est supérieur à quatre fois la variabilité de l'indicateur de qualité de connexion associé au noeud client dans une position statique.

Selon un mode de réalisation complémentaire de l'invention, le noeud dit de gestion est l'un des noeuds de collecte du réseau de communication distribué.

Selon un mode de réalisation complémentaire de l'invention, le réseau de communication est un réseau de communication sans fil distribué conforme à une norme IEEE 802.11.

L'invention concerne également un noeud de gestion d'un réseau de communication sans fil distribué, le réseau de communication comprenant une pluralité de noeud de collecte, le noeud de gestion étant adapté pour exécuter les étapes du procédé de détermination d'une éligibilité à un transfert de connexion d'un noeud client décrit dans le présent document.

L'invention concerne également un programme d'ordinateur, qui peut être stocké sur un support et/ou téléchargé d'un réseau de communication, afin d'être lu par un processeur d'un noeud de gestion d'un réseau de communication sans fil distribué. Ce programme d'ordinateur comprend des instructions pour implémenter tout ou partie des étapes du procédé de détermination d'une éligibilité à un transfert de connexion pour un noeud client, lorsque ledit programme est exécuté par le processeur.

L'invention concerne également un medium de stockage d'informations ou support d'enregistrement, lisible ou accessible par le noeud de gestion du réseau de communication sans fil distribué, le medium de stockage d'informations ou support d'enregistrement comprenant un tel programme d'ordinateur,

**Dessins**

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la **Fig. 1** illustre schématiquement l'architecture d'un réseau de communication sans fil distribué comprenant une pluralité de noeuds, par exemple conforme à une norme IEEE 802.11,
- la **Fig. 2** illustre schématiquement les principales étapes d'un procédé de gestion d'une connexion d'un noeud client à un réseau de communication sans fil distribué,
- la **Fig. 3** illustre schématiquement un procédé de détermination d'une éligibilité à un transfert de connexion pour un noeud client connecté à un noeud de collecte d'un réseau de communication sans fil distribué,
- la **Fig. 4** illustre schématiquement une représentation théorique de zones de niveau définies par une pluralité de seuils d'éligibilité selon un mode de réalisation de l'invention,
- la **Fig. 5** illustre schématiquement l'architecture matérielle d'un dispositif électronique ou noeud de gestion d'un réseau de communication sans fil distribué, le dispositif électronique ou noeud de gestion étant adapté pour exécuter tout ou partie des étapes du procédé de détermination d'une éligibilité à un transfert de connexion pour un noeud client connecté à un noeud de collecte d'un réseau de communication sans fil distribué, selon le mode de réalisation illustré dans la Fig. 3.

**Description Détaillée**

L'invention permet avantageusement de perfectionner le procédé divulgué dans la demande de brevet français n° 18/55829 déposée le 28 juin 2018 (ci-après « précédente demande de brevet »). L'invention permet particulièrement d'éviter des coupures de connexion pour des noeuds clients ne supportant pas les normes IEEE 802.11k et/ou IEEE 802.11v (cf. le procédé 200 divulgué dans la demande de brevet français n° 18/55829 déposée le 28 juin 2018, pages 7 à 13, plus spécifiquement la description des étapes 205 et 206). Le procédé objet de l'invention permet ainsi d'éviter de forcer indûment et à répétition un transfert de connexion d'un noeud client connecté à un noeud de collecte par blocage de la connexion par le noeud de collecte. En effet, dans le procédé divulgué dans la demande de brevet français cité, le noeud client est possiblement coupé du réseau de communication durant tout le temps de blocage (« blacklisting » en anglais) par le noeud de collecte, qui peut se révéler être le seul à pouvoir connecter le noeud client au réseau de communication.

Toutefois, avantageusement, l'invention concerne un procédé adapté aussi bien à des noeuds clients conformes à une norme IEEE 802.11k et/ou IEEE 802.11v qu'à des noeuds n'étant pas conforme à ces deux normes.

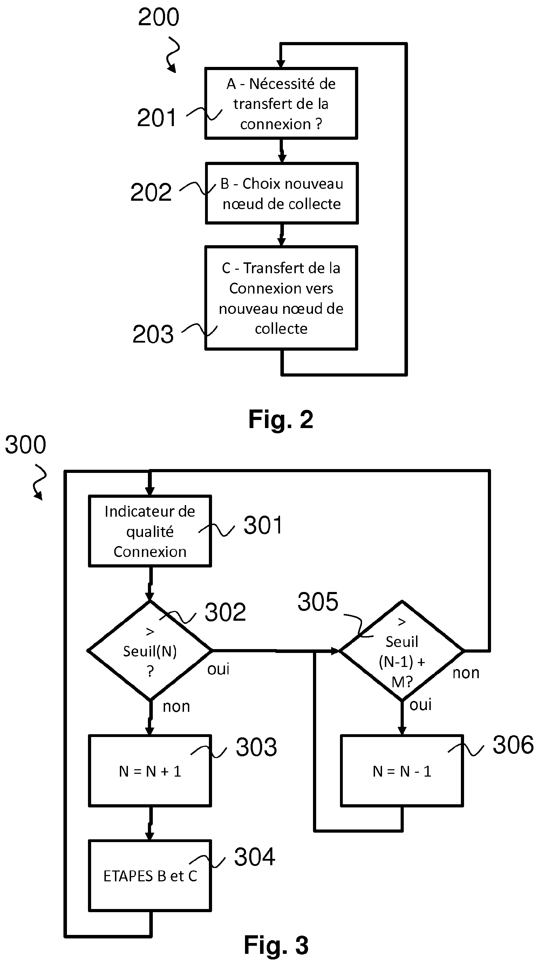

Dans les procédés 200 et 300 illustrés ci-après dans la Fig. 2 et la Fig. 3, le réseau 100 comprend un noeud dit de gestion. Les fonctions dudit noeud de gestion peuvent être intégrées dans l'un des noeuds de collecte du réseau 100, par exemple le noeud dit central B1 101 ou bien être intégrées dans un dispositif électronique dédié du réseau 100. Selon un autre mode de réalisation de l'invention, ces fonctions peuvent être intégrées dans la passerelle 110.

La **Fig. 2** illustre schématiquement les principales étapes d'un procédé 200 de gestion d'une connexion d'un noeud client à un réseau de communication sans fil distribué, par exemple le réseau de communication 100.

Le procédé 200 est exécuté par un noeud de gestion du réseau 100, le noeud de gestion étant possiblement l'un ou l'autre des noeuds de collecte du réseau 100. Possiblement, chaque noeud de collecte peut prendre le rôle de noeud de gestion. Le réseau 100 peut alors comprendre un procédé pour déterminer lequel des noeuds de collecte doit prendre le rôle de noeud de gestion.

Le procédé 200 est possiblement exécuté périodiquement pour chacune des connexions des noeuds client du réseau 100 afin de vérifier régulièrement s'il est nécessaire de transférer une connexion existante d'un noeud client sur un noeud de collecte vers un autre noeud de collecte. Alternativement ou de façon complémentaire, le procédé 200 peut être déclenché par un évènement prédéterminé, par exemple lors de la connexion d'un nouveau noeud client au réseau, lorsqu'un noeud de collecte détermine qu'il est en surcharge, etc.

La première étape 201 correspond à la détermination de l'opportunité de transférer la connexion d'un noeud client connecté à un noeud de collecte du réseau. Classiquement, et comme divulgué dans la précédente demande de brevet (cf. description des étapes 202 et 302), un indicateur de qualité de la connexion entre le noeud client et le noeud de collecte est déterminé puis comparé à un seuil prédéterminé. Si la comparaison indique que la qualité de connexion est, comparativement au seuil, bonne, alors il n'y a pas nécessité de transférer la connexion vers possiblement un autre noeud de collecte. Dans l'hypothèse inverse, alors le noeud de gestion considère que la qualité de connexion actuelle est insatisfaisante et que la connexion du noeud client devrait être transférée vers un autre noeud de collecte pour bénéficier d'une meilleure qualité de connexion.

Dans ce dernier cas, le procédé passe à l'étape 202 de détermination d'un possible nouveau noeud de collecte qui permettrait d'obtenir une meilleure qualité de connexion (description des étapes 207, 208 et 209, ou 305, 306, 307, 308 et 309 de la précédente demande).

Une fois un meilleur noeud de collecte déterminé, le procédé de transfert de connexion, dans une étape 203, procède au transfert de la connexion depuis l'ancien noeud de collecte vers le nouveau noeud de collecte.

Parfois, les étapes 202 et 203 sont intégrées au sein d'une seule et même étape. En effet, comme vu précédemment par exemple pour des noeuds clients non conformes à une norme IEEE 802.11k et/ou IEEE 802.11v, il est techniquement difficile de déterminer un noeud de collecte qui permettrait d'offrir une meilleure qualité de connexion. Il est alors possible de bloquer temporairement la connexion entre le noeud client et le noeud de collecte, afin de forcer le noeud client à procéder lui-même à la sélection d'un meilleur noeud de collecte. Si le noeud client ne peut pas sélectionner un meilleur noeud de collecte pour établir une nouvelle connexion, alors le noeud client peut être coupé temporairement du réseau de communication.

Les étapes 201, 202 et 203 pouvant être périodiquement répétées, un noeud client non conforme à une norme IEEE 802.11k et/ou IEEE 802.11v peut être très régulièrement coupé du réseau de communication. En effet, si à chaque étape 201 le noeud de gestion considère que la connexion doit être transférée alors que le noeud client est déjà connecté au seul noeud de collecte possible, alors le noeud client sera coupé du réseau temporairement à chaque itération du procédé.

Le procédé décrit ci-après dans la Fig. 3 correspond à un procédé de détermination d'une éligibilité à un transfert de connexion pour un noeud client d'un réseau distribué, procédé pouvant correspondre à l'étape 201 de la Fig. 2.

Chaque noeud de collecte du réseau 100 peut être connecté à un bus de communication, par exemple un bus de communication logiciel sécurisé tel que décrit dans la demande de brevet WO 2013/087894 A1 publiée le 20 juin 2013. Ainsi, les noeuds de collecte peuvent périodiquement s'échanger les données de qualité de connexion collectées par chaque noeud de collecte et constituer une base de données distribuée ou répliquée par chaque noeud de collecte comprenant, pour chaque noeud de collecte, toutes les données qualités collectées.

La **Fig. 3** illustre schématiquement un procédé 300 de détermination d'une éligibilité à un transfert de connexion pour un noeud client connecté à un noeud de collecte d'un réseau 100 de communication sans fil distribué. Le réseau 100 comprend une pluralité de noeuds de collecte. Chaque noeud client est connecté à un noeud de collecte. Chaque noeud client est associé à un niveau parmi une pluralité de niveaux. Ce niveau est associé à un noeud client et peut varier dynamiquement selon le procédé décrit ci-après. Un niveau associé à un noeud client peut être conservé par le noeud client après une déconnexion d'un noeud de collecte. Le procédé 300 est exécuté par un noeud dit de gestion du réseau 100, possiblement l'un des noeuds de collecte.

Dans une première étape 301, un noeud de gestion du réseau 100 détermine un indicateur de qualité de connexion « ScoreStation » associé au noeud client, l'indicateur de qualité de connexion étant représentatif d'une qualité de la connexion entre le premier noeud de collecte et le noeud client.

Le noeud de gestion peut déterminer un indicateur de qualité de connexion associé à un noeud client connecté à un premier noeud de collecte, l'indicateur de qualité de connexion étant représentatif d'une qualité de la connexion entre le premier noeud de collecte et le noeud client. Dit autrement, le noeud de gestion, pour chaque connexion établie dans le réseau 100, ou sur une sélection de ces connexions, détermine un indicateur de qualité associé à la connexion. Cet indicateur de qualité, dit « ScoreStation », peut être déterminé selon la formule suivante pour une connexion donnée :

$$ScoreStation = coef1 \text{ x } RSSI + coef2 \text{ x } PhyRate,$$

avec :

« *ScoreStation* » : indicateur de qualité d'une connexion entre un noeud client et un noeud de collecte,
« *coef1* » : premier coefficient de pondération,
« coef2 » : deuxième coefficient de pondération,
« *RSSI* » : puissance en réception d'un signal radio émis par le noeud client et reçu par le premier noeud de collecte,
« *PhyRate* » : débit de transmission bas niveau de la connexion.

Selon un mode de réalisation de l'invention, les coefficients de pondération « *coef1* » et « *coef2* » peuvent être prédéterminés. Selon un autre mode de réalisation de l'invention, les coefficients de pondération « *coef1* » et « *coef2* » sont déterminés par les formules :

(1) si la connexion est active, c'est-à-dire que le noeud client échange des données avec le noeud de collecte, alors la donnée de qualité « *airTimeUsage* » est positive et :

$$Coef1 = Coef2 = PhyRateTreshold \text{ / } RSSITreshold,$$

avec :

« *PhyRateTreshold* » : valeur prédéterminée du débit de transmission bas niveau de la connexion, typiquement choisie dans la plage [26 ; 52],
« *RSSITreshold* » : valeur prédéterminée de la puissance en réception d'un signal radio émis par le noeud client et reçu par le premier noeud de collecte, typiquement choisie dans la plage [-80 ; -65].

(2) si la connexion est inactive, c'est-à-dire que le noeud client n'échange pas de données avec le noeud de collecte (dit autrement, le noeud client est en « sommeil »), alors la donnée de qualité « *airTimeUsage* » est nulle et :

$$Coef1 = 1 \text{ / } RSSITreshold,$$

et,

$$Coef2 = 0.$$

La pondération des coefficients Coef1 et Coef2 permet de couvrir les cas où le noeud client est actif ou bien en sommeil.

La valeur du paramètre « *RSSITreshold* » étant ici choisie dans une plage de valeurs négatives, les coefficients « Coef1 » et « Coef2 » sont donc négatifs. Ainsi, une dégradation de la qualité de connexion se traduit-elle par une augmentation de la valeur de l'indicateur de qualité « ScoreStation ».

Selon le mode de réalisation de l'invention, l'indicateur de qualité « ScoreStation » est choisi égal au « RSSI ». Dans ce cas, une dégradation de la qualité de connexion se traduit par une diminution de la valeur de l'indicateur de qualité « ScoreStation ».

Ainsi, dans la suite de la description, selon la définition de l'indicateur de qualité choisie, un indicateur de qualité de connexion supérieur à un seuil de qualité pourra indiquer soit une qualité de connexion meilleure, soit une moins bonne qualité de connexion. L'homme du métier sait adapter les comparaisons entre l'indicateur de qualité et les seuils suivant la définition de l'indicateur de qualité utilisée et le résultat cherché. Ci-après, nous adoptons comme convention que la valeur de l'indicateur de connexion augmente lorsque la qualité de connexion s'améliore.

Dans une étape suivante 302, le noeud de gestion détermine, en fonction du niveau associé au noeud client, un seuil de qualité de connexion, ledit seuil étant d'autant plus indicateur d'une bonne qualité de connexion que le niveau associé au noeud client est bas. Dit autrement, le noeud de gestion détermine, pour chaque noeud client, et en fonction du niveau associé audit noeud client, un seuil de qualité. Ce seuil de qualité permet de définir une valeur limite entre une qualité de connexion acceptable (« pas de transfert de connexion nécessaire ») et une qualité de connexion non acceptable (« il peut être utile de voir si un transfert pourrait améliorer la situation »). La valeur du seuil est déterminée en fonction du niveau associé à chaque noeud client.

Selon un mode de réalisation de l'invention, un niveau est un entier naturel strictement positif. Par défaut, avant l'exécution des étapes du présent procédé, chaque noeud client est associé au niveau « 1 », qui est alors associé à un seuil de qualité indicateur de la meilleure qualité de connexion. Les autres niveaux (2, 3, etc.) sont associés à des seuils comparativement associées à des qualités de connexions inférieures et ce de manière décroissante. Le niveau auquel est associé chaque noeud client peut être conservé même après rupture de sa connexion avec un noeud de collecte. Le même niveau est utilisé quel que soit le noeud de collecte auquel le noeud client est connecté.

Ainsi, selon un mode de réalisation de l'invention, l'ensemble des seuils déterminés en fonction des niveaux associés à un noeud client constitue une suite arithmétique. Par exemple :

$$S(n) = S_1 + (n\text{-}1).R,$$

avec :

« n » : niveau associé à un noeud client, « n » étant un entier strictement positif,
« S(n) » : seuil associé au niveau « n » pour un noeud client,
« Si » : seuil de référence, associé au niveau « 1 », par exemple -60 dBm,
« R » : paramètre définissant l'écart entre deux seuils consécutifs, par exemple « - 15 dBm ».

Selon un autre mode de réalisation de l'invention, l'ensemble des seuils déterminés en fonction des niveaux associés à un noeud client constitue une suite géométrique. Par exemple :

$$S(n) = S_1.q^n,$$

avec :

« n » : niveau associé à un noeud client, « n » étant un entier strictement positif,
« S(n) » : seuil associé au niveau « n » pour un noeud client,
« Si » : seuil de référence, associé au niveau « 1 », par exemple -60 dBm,
« q » : raison de la suite, par exemple « 1.2 »

Selon un autre mode de réalisation de l'invention, l'ensemble des seuils déterminés en fonction des niveaux associés à un noeud client peut constituer tout type de suite mathématiques ou d'arrangement arbitraire de valeurs du moment que l'ensemble des seuils constitue une liste ordonnée de valeurs. Ainsi, un seuil peut être déterminé en fonction d'un niveau au moyen d'une fonction mathématique ou bien en retrouvant une valeur associé au niveau dans une liste prédéfinie de valeurs.

Lors de cette même étape 302, une fois la valeur du seuil déterminée, le noeud de gestion compare la valeur de l'indicateur de qualité déterminée et la valeur du seuil.

Si l'indicateur de qualité de connexion comparativement au seuil indique une mauvaise qualité relative de la connexion, alors le noeud de gestion passe à l'étape 303.

Si l'indicateur de qualité de connexion comparativement au seuil indique une bonne qualité relative de la connexion, alors le noeud de gestion passe à l'étape 305.

Dit autrement, dans l'hypothèse où l'indicateur de qualité est d'autant plus grand que la qualité de la connexion est bonne, alors :

- si la valeur de l'indicateur de qualité est supérieure au seuil, alors le noeud de gestion passe à l'étape 305,
- sinon, si la valeur de l'indicateur de qualité est inférieure au seuil, alors le noeud de gestion passe à l'étape 303.

Lors de l'étape 303, le noeud de gestion incrémente le niveau associé au noeud client. Cela a pour effet d'associer au noeud client un seuil de qualité moins contraignant en termes de qualité. Le noeud de gestion passe ensuite à l'étape 304.

Lors de l'étape 304, le noeud de gestion exécute les étapes d'un procédé de transfert de la connexion du noeud client. Dit autrement, le noeud de gestion réalise les étapes connues de gestion de transfert de la connexion du noeud client, comme par exemple décrit dans la précédente demande de brevet. Ces étapes peuvent comprendre une première étape de sélection d'un noeud de collecte puis une étape de transfert de la connexion. Selon le mode de réalisation de l'invention, cette étape 304 peut comprendre une étape de blocage temporaire de la connexion entre le noeud client et le noeud de collecte. Dans l'hypothèse où le noeud de collecte est le seul à pouvoir connecter le noeud client, la répétition des étapes 301, 302, 303 et 304 mène in fine à une situation ou l'incrémentation du niveau associé au noeud client fait que le seuil est au final moins contraignant que la qualité actuelle de la connexion, ce qui met fin aux coupures de la connexion par blocage du noeud de collecte. La présente solution converge vers une situation évitant les interruptions de services du noeud client et permet de stabiliser la connexion au réseau 100.

Lors des étapes 305 et 306, le noeud de gestion décrémente le niveau associé au noeud client, si, et tant que, l'indicateur de qualité de connexion comparativement à un seuil déterminé en fonction du niveau immédiatement inférieur au niveau associé au noeud client indique une meilleure qualité de connexion.

Dit autrement, lors de l'étape 305, le noeud de gestion compare la valeur de l'indicateur de qualité déterminée lors de l'étape 301 avec la valeur du seuil déterminé en fonction du niveau inférieur au niveau actuel. Ainsi, si lors de la réalisation de l'étape 305, le niveau associé au noeud client est « n », alors le noeud de gestion compare l'indicateur de qualité avec le « S(n-1) ».

Selon le mode de réalisation de l'invention, le noeud de gestion compare la valeur de l'indicateur de qualité avec une valeur de seuil modifiée égale à :

$$S(n-1) + M,$$

avec

« S(n-1) » : valeur du seuil déterminée en fonction du niveau « n-1 »,
« M » : marge prédéfinie.

La valeur de la marge « M » permet d'éviter des phénomènes de bagotement dans le cas où la valeur de l'indicateur de qualité est proche de la valeur d'un seuil, la variabilité de la mesure de l'indicateur de qualité pouvant alors faire basculer l'indicateur d'un côté ou de l'autre du seuil.

Si l'indicateur de qualité est supérieur à la valeur de seuil « S(n-1) » ou bien la valeur de seuil modifiée « S(n-1) + M », selon l'implémentation de l'invention, alors, tant que le niveau est strictement supérieur à la valeur « 1 », la valeur du niveau associé au noeud client est décrémentée dans une étape 306 : n -> n-1.

Si l'indicateur de qualité est inférieur à la valeur de seuil « S(n-1) » ou bien la valeur de seuil modifiée « S(n-1) + M », selon l'implémentation de l'invention, ou que la valeur du niveau passe à « 1 », alors le noeud de gestion peut reprendre une itération du procédé 300 en repartant de l'étape 301. La valeur du niveau associé au noeud client est conservée d'une itération à l'autre.

Selon un mode de réalisation de l'invention, l'écart entre deux seuils consécutifs de qualité de connexion déterminés en fonction des niveaux d'un noeud client (par exemple S(n) et S(n+1)) est supérieur à la variabilité de l'indicateur de qualité de connexion associé au noeud client dans une position statique. Dit autrement, pour éviter des phénomènes de bagotement, l'écart de valeur entre deux seuils doit permettre de prendre en compte la variabilité naturelle d'un indicateur de qualité d'un noeud client statique, ou du moins restant à peu près à la même position. Ainsi, l'écart entre deux seuils consécutifs de qualité de connexion déterminés en fonction des niveaux d'un noeud client est avantageusement supérieur à quatre fois la variabilité de l'indicateur de qualité de connexion associé au noeud client dans une position statique.

Selon un mode de réalisation de l'invention, le noeud dit de gestion est l'un des noeuds de collecte du réseau de communication distribué.

Selon un mode de réalisation de l'invention, le réseau de communication est un réseau de communication sans fil distribué conforme à une norme IEEE 802.11.

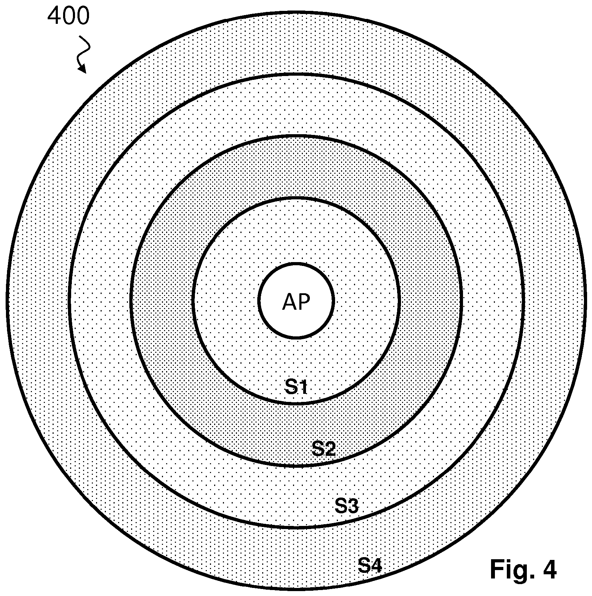

La **Fig. 4** illustre schématiquement une représentation théorique de zones de niveau définies par une pluralité de seuils d'éligibilité selon un mode de réalisation de l'invention.

Ainsi, « AP » représente un noeud de collecte du réseau 100.

La zone « S1 » représente une zone pour laquelle l'indicateur de qualité d'un noeud client situé dans cette zone serait supérieur à la valeur de seuil S1.

La zone « S2 » représente une zone pour laquelle l'indicateur de qualité d'un noeud client situé dans cette zone serait supérieur à la valeur de seuil S2, mais inférieur à S1.

La zone « S3 » représente une zone pour laquelle l'indicateur de qualité d'un noeud client situé dans cette zone serait supérieur à la valeur de seuil S3, mais inférieur à S2, et ainsi de suite.

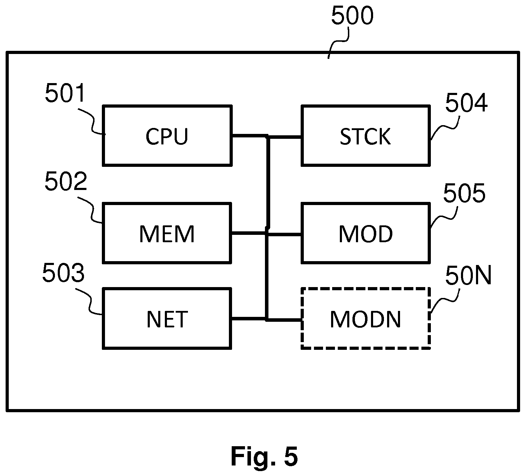

La **Fig. 5** illustre schématiquement l'architecture matérielle d'un dispositif électronique ou noeud de gestion 500 d'un réseau de communication sans fil distribué, le dispositif électronique ou noeud de gestion 500 étant adapté pour exécuter tout ou partie des étapes du procédé de détermination d'une éligibilité à un transfert de connexion pour un noeud client connecté à un noeud de collecte d'un réseau de communication sans fil distribué, selon le mode de réalisation illustré dans la Fig. 3. Le noeud de gestion 500 peut être l'un des noeuds de collecte B1, B2, B3, B4 ou B5 illustrés dans la Fig. 1.

Ainsi, le dispositif électronique 500 comprend, reliés par un bus de communication : un processeur ou CPU (« *Central Processing Unit* » en anglais) 501 ; une mémoire MEM 502 de type RAM (« *Random Access Memory* » en anglais) et/ou ROM (« *Read Only Memory* » en anglais), possiblement un module réseau NET 503, par exemple de type Ethernet, un module de stockage STCK 504 de type stockage interne et possiblement une pluralité de modules radiofréquence 505 à 50N conformes à une norme de type IEEE 802.11. Le module de stockage STCK 504 peut être de type disque dur HDD (« *Hard Disk Drive* » en anglais) ou SSD (« *Solid-State Drive* » en anglais), ou de type lecteur de support de stockage externe, tel un lecteur de cartes SD (« *Secure Digital* » en anglais). Le processeur CPU 501 peut enregistrer des données, ou informations, dans la mémoire MEM 502 ou dans le module de stockage STCK 504. Le processeur CPU 501 peut lire des données enregistrées dans la mémoire MEM 502 ou dans le module de stockage STCK 504. Ces données peuvent correspondre à des paramètres de configuration. Le module réseau NET 503, si présent, permet typiquement la connexion du dispositif électronique 500 à un réseau local et/ou Internet. Chaque module radiofréquence 505 à 50N permet au dispositif électronique 500 d'établir une pluralité d'interfaces radiofréquences conformes à une norme dite Wi-Fi, par exemple la norme IEEE 802.11k et/ou la norme IEEE 802 .11v. Une interface radiofréquence peut être un point d'accès Wi-Fi, ou au contraire une interface radiofréquence dite utilisateur permettant une association à une interface radiofréquence dite point d'accès d'un autre dispositif électronique.

Le processeur CPU 501 est capable d'exécuter des instructions chargées dans la mémoire MEM 502, par exemple à partir du module de stockage STCK 504. Lorsque le dispositif électronique 500 est mis sous tension, le processeur CPU 501 est capable de lire de la mémoire MEM 502 des instructions et de les exécuter. Ces instructions forment un programme d'ordinateur causant la mise en oeuvre, par le processeur CPU 501, de tout ou partie des procédés et étapes décrits ci-avant, particulièrement le procédé décrit dans la Fig. 2 ou le procédé décrit dans la Fig. 3. Ainsi, tout ou partie des procédés et étapes décrits ci-avant peut être implémenté sous forme logicielle par exécution d'un ensemble d'instructions par une machine programmable, tel qu'un DSP (« *Digital Signal Processor* » en anglais) ou un microcontrôleur. Tout ou partie des procédés et étapes décrits ici peuvent aussi être implémentés sous forme matérielle par une machine ou un composant dédié, tel qu'un FPGA (« *Field-Programmable Gate Array* » en anglais) ou un ASIC (« *Application-Specific Integrated Circuit* » en anglais). Les fonctions du dispositif électronique 500 peuvent être intégrées dans un noeud, par exemple un noeud de gestion et/ou de collecte, d'un réseau sans fil conforme à une norme 802.11 IEEE par une mise à jour d'un logiciel, c'est-à-dire par exemple par mise à jour du microprogramme (« *firmware* » en anglais) du dispositif électronique 500.

**Revendications**

1. Procédé de détermination d'une éligibilité à un transfert de connexion d'un noeud client d'un réseau de communication distribué comprenant une pluralité de noeuds de collecte, le noeud client étant connecté à un premier noeud de collecte, ledit procédé étant **caractérisé en ce que** le noeud client étant initialement associé à un niveau égal à 1 parmi une pluralité de niveaux, lesdits niveaux étant des entiers naturels strictement positifs, le procédé est exécuté par un noeud dit de gestion et comprend les étapes itératives de :

- a) déterminer (301) un indicateur de qualité de connexion associé au noeud client, l'indicateur de qualité de connexion étant représentatif d'une qualité de la connexion entre le premier noeud de collecte et le noeud client,
- b) déterminer (302) un premier seuil de qualité de connexion en fonction du niveau associé au noeud client, ledit premier seuil étant d'autant plus élevé que le niveau associé au noeud client est bas,

si l'indicateur de qualité de connexion est inférieur au premier seuil de qualité de connexion (302), alors :

- incrémenter (303) le niveau associé au noeud client,
- exécuter (304) des étapes d'un procédé de transfert de la connexion du noeud client vers un nouveau noeud de collecte,

si l'indicateur de qualité de connexion est supérieur au premier seuil de qualité de connexion (302) et supérieur à un second seuil, ledit second seuil étant égal à la somme d'un seuil de qualité de connexion déterminé en fonction du niveau immédiatement inférieur au niveau associé au noeud client et d'une marge prédéfinie, alors :

- c) décrémenter (306) le niveau associé au noeud client ;
- répéter c) tant que l'indicateur de qualité de connexion est supérieur à un seuil de qualité de connexion déterminé en fonction du niveau immédiatement inférieur au niveau associé au noeud client, seuil auquel est ajouté ladite marge prédéfinie ;

et sinon, reprendre à l'étape a).

2. Procédé selon la revendication précédente, l'ensemble des seuils déterminés en fonction des niveaux associés à un noeud client constituant une suite arithmétique ou géométrique.

3. Procédé selon l'une des revendications précédentes, l'écart entre deux seuils consécutifs de qualité de connexion déterminés en fonction des niveaux d'un noeud client est supérieur à la variabilité de l'indicateur de qualité de connexion associé au noeud client dans une position statique.

4. Procédé selon l'une des revendications précédentes, l'écart entre deux seuils consécutifs de qualité de connexion déterminés en fonction des niveaux d'un noeud client est supérieur à quatre fois la variabilité de l'indicateur de qualité de connexion associé au noeud client dans une position statique.

5. Procédé selon l'une des revendications précédentes, le noeud dit de gestion étant l'un des noeuds de collecte du réseau de communication distribué.

6. Procédé selon l'une des revendications précédentes, le réseau de communication étant un réseau de communication sans fil distribué conforme à une norme IEEE 802.11.

7. Noeud de gestion (B1, B2, B3, B4) d'un réseau de communication sans fil distribué, le réseau de communication comprenant une pluralité de noeud de collecte, le noeud de gestion étant **caractérisé en ce qu'**il est adapté pour exécuter les étapes du procédé selon l'une quelconque des revendications précédentes.

8. Programme d'ordinateur, **caractérisé en ce qu'**il comprend des instructions pour mettre en oeuvre, par un processeur (501) d'un noeud de gestion (500) d'un réseau de communication sans fil distribué comprenant une pluralité de noeuds de collecte, un procédé (300) selon l'une quelconque des revendications 1 à 6, lorsque le programme d'ordinateur est exécuté par le processeur.

9. Support d'enregistrement, lisible par un noeud de gestion d'un réseau de communication sans fil distribué, sur lequel est stocké le programme d'ordinateur selon la revendication précédente.


**Patentansprüche**

1. Verfahren zur Bestimmung einer Berechtigung für ein Verbindungs-Handover eines Client-Knotens eines verteilten Kommunikationsnetzes, das eine Vielzahl von Sammelknoten enthält, wobei der Client-Knoten mit einem ersten Sammelknoten verbunden ist, wobei das Verfahren **dadurch gekennzeichnet ist, dass**, da der Client-Knoten ursprünglich einer Ebene gleich 1 unter einer Vielzahl von Ebenen zugeordnet ist, wobei die Ebenen strikt positive natürliche Zahlen sind, das Verfahren von einem so genannten Verwaltungsknoten ausgeführt wird und die folgenden iterativen Schritte enthält:

- a) Bestimmen (301) eines dem Client-Knoten zugeordneten Verbindungsqualitätsindikators, wobei der Verbindungsqualitätsindikator für eine Qualität der Verbindung zwischen dem ersten Sammelknoten und dem Client-Knoten repräsentativ ist,
- b) Bestimmen (302) einer ersten Verbindungsqualitätsschwelle abhängig von der dem Client-Knoten zugeordneten Ebene, wobei die erste Schwelle um so höher ist, je niedriger die dem Client-Knoten zugeordnete Ebene ist,
wenn der Verbindungsqualitätsindikator niedriger ist als die erste Verbindungsqualitätsschwelle (302), dann:

- Inkrementieren (303) der dem Client-Knoten zugeordneten Ebene,
- Ausführen (304) der Schritte eines Handover-Verfahrens der Verbindung des Client-Knotens zu einem neuen Sammelknoten,
wenn der Verbindungsqualitätsindikator höher als die erste Verbindungsqualitätsschwelle (302) und höher als eine zweite Schwelle ist, wobei die zweite Schwelle gleich der Summe einer Verbindungsqualitätsschwelle, die abhängig von der direkt unter der dem Client-Knoten zugeordneten Ebene liegenden Ebene bestimmt wird, und eines vordefinierten Spielraums ist, dann:
c) Dekrementieren (306) der dem Client-Knoten zugeordneten Ebene;
- Wiederholen von c), so lange der Verbindungsqualitätsindikator höher ist als eine Verbindungsqualitätsschwelle, die abhängig von der direkt unter der dem Client-Knoten zugeordneten Ebene liegenden Ebene bestimmt wird, Schwelle, der der vordefinierte Spielraum hinzugefügt wird;

und sonst, Wiederbeginn im Schritt a).

2. Verfahren nach dem vorhergehenden Anspruch, wobei die Gesamtheit der abhängig von den einem Client-Knoten zugeordneten Ebenen bestimmten Schwellen eine arithmetische oder geometrische Folge bildet.

3. Verfahren nach einem der vorhergehenden Ansprüche, wobei die Abweichung zwischen zwei aufeinanderfolgenden Verbindungsqualitätsschwellen, die abhängig von den Ebenen eines Client-Knotens bestimmt werden, größer ist als die Veränderlichkeit des dem Client-Knoten zugeordneten Verbindungsqualitätsindikators in einer statischen Position.

4. Verfahren nach einem der vorhergehenden Ansprüche, wobei die Abweichung zwischen zwei aufeinanderfolgenden Verbindungsqualitätsschwellen, die abhängig von den Ebenen eines Client-Knotens bestimmt werden, größer ist als das Vierfache der Veränderlichkeit des dem Client-Knoten zugeordneten Verbindungsqualitätsindikators in einer statischen Position.

5. Verfahren nach einem der vorhergehenden Ansprüche, wobei der so genannte Verwaltungsknoten einer der Sammelknoten des verteilten Kommunikationsnetzes ist.

6. Verfahren nach einem der vorhergehenden Ansprüche, wobei das Kommunikationsnetz ein verteiltes drahtloses Kommunikationsnetz gemäß einer Norm IEEE 802.11 ist.

7. Verwaltungsknoten (B1, B2, B3, B4) eines verteilten drahtlosen Kommunikationsnetzes, wobei das Kommunikationsnetz eine Vielzahl von Sammelknoten enthält, wobei der Verwaltungsknoten **dadurch gekennzeichnet ist, dass** er geeignet ist, die Schritte des Verfahrens nach einem der vorhergehenden Ansprüche auszuführen.

8. Computerprogramm, **dadurch gekennzeichnet, dass** es Anweisungen enthält, um durch einen Prozessor (501) eines Verwaltungsknotens (500) eines verteilten drahtlosen Kommunikationsnetzes, das eine Vielzahl von Sammelknoten enthält, ein Verfahren (300) nach einem der Ansprüche 1 bis 6 durchzuführen, wenn das Computerprogramm vom Prozessor ausgeführt wird.

9. Speicherträger, lesbar von einem Verwaltungsknoten eines verteilten drahtlosen Kommunikationsnetzes, auf dem das Computerprogramm nach dem vorhergehenden Anspruch gespeichert ist.

**Claims**

1. Method for determining eligibility for a handover of a client node of a distributed communication network comprising a plurality of gathering nodes, the client node being connected to a first gathering node, said method being **characterised in that**, the client node initially being associated with a level equal to 1 among a plurality of levels, said levels being strictly positive natural integers, the method is executed by a so-called management node and comprises the iterative steps of:

   - a) determining (301) a connection quality indicator associated with the client node, the connection quality indicator representing a quality of the connection between the first gathering node and the client node,
   - b) determining (302), according to the level associated with the client node, a connection quality threshold, said threshold being higher, the lower the level associated with the client node,

   if the connection quality indicator is lower than the first connection quality threshold (302),, then:

   - incrementing (303) the level associated with the client node,
   - performing (304) steps of a method for handover of the client node to a new gathering node,

   if the connection quality indicator is higher than the first connection quality threshold (302) and higher than a second threshold, said second threshold being equal to the sum of a connection quality threshold determined according to the level immediately below the level associated with the client node and a predefined margin, then:

   - c) decrementing (306) the level associated with the client node;
   - repeating c) as long as the connection quality indicator is higher than a connection quality threshold determined according to the level immediately below the level associated with the client node, a threshold to which said predefined margin is added;
   and if not, resuming at the step a).

2. Method according to the preceding claim, all the thresholds determined according to the levels associated with a client node constituting an arithmetic or geometric series.

3. Method according to one of the preceding claims, the difference between two consecutive connection quality thresholds determined according to the levels of a client node is greater than the variability of the connection quality indicator associated with the client node in a static position.

4. Method according to one of the preceding claims, the difference between two consecutive connection quality thresholds determined according to the levels of a client node is greater than four times the variability of the connection quality indicator associated with the client node in a static position.

5. Method according to one of the preceding claims, the so-called management node being one of the gathering nodes of the distributed communication network.

6. Method according to one of the preceding claims, the communication network being a distributed wireless communication network conforming to an IEEE 802.11 standard.

7. Node (B1, B2, B3, B4) for managing a distributed wireless communication network, the communication network comprising a plurality of gathering nodes, the management node being **characterised in that** it is suitable for executing the steps of the method according to any of the preceding claims.

8. Computer program, **characterised in that** it comprises instructions for the implementation, by a processor (501) of a management node (500) of a distributed wireless communication network comprising a plurality of gathering nodes, of a method (300) according to any of claims 1 to 6, when the computer program is executed by the processor.

9. Recording medium, which can be read by a management node of a distributed wireless communication network, on which the computer program according to the preceding claim is stored.

**Fig. 1**

200

201

A - Nécessité de transfert de la connexion ?

202

B - Choix nouveau nœud de collecte

203

C - Transfert de la Connexion vers nouveau nœud de collecte

**Fig. 2**

300

Indicateur de qualité Connexion

301

302

> Seuil(N) ?

oui

non

305

> Seuil (N-1) + M?

non

oui

303

N = N + 1

306

N = N - 1

304

ETAPES B et C

**Fig. 3**

Fig. 4

**Fig. 5**

**EP 3 629 628 B1**

## RÉFÉRENCES CITÉES DANS LA DESCRIPTION

**Documents brevets cités dans la description**

- FR 1855829
- US 2018084471 A
- US 2010056157 A
- WO 2013087894 A1